# EUROPÄISCHE PATENTSCHRIFT

(11) **EP 1 607 280 B1**
(45) Veröffentlichungstag und Bekanntmachung des Hinweises auf die Patenterteilung: **14.03.2007**
(21) Anmeldenummer: 05014150.6
(22) Anmeldetag: 01.12.2003
(51) Int. Cl.: B60R 21/20

(54) **Gassackmodul**
Airbag module
Module de coussin gonflable

(30) Priorität: 08.01.2003 DE 20300170 U
(43) Veröffentlichungstag der Anmeldung: 21.12.2005
(62) Teilanmeldung aus: 03027452.6
(73) Patentinhaber: TRW Automotive Safety Systems GmbH, 63743 Aschaffenburg (DE)
(72) Erfinder: Keutz, Markus, 64380 Rossdorf (DE); Helmstetter, Matthias, 63743 Aschaffenburg (DE); Magoley, Marcus, 63739 Aschaffenburg (DE)
(74) Vertreter: Sulzbach, Werner

(56) Entgegenhaltungen:
- DE-A- 10 036 759
- US-A- 5 125 682
- US-A1- 2001 052 691

## Beschreibung

Die Erfindung betrifft ein Gassackmodul gemäß dem Oberbegriff des Anspruchs 1.

Die DE 100 36 759 A1 zeigt eine gattungsgemäße Insassenschutzvorrichtung mit einem Gassackmodul, bei dem eine zentrale Abdeckplatte eine Austrittsöffnung des Gassacks in einem Modulgehäuse abdeckt, wobei die Abdeckplatte fest mit einem verschiebbaren Teleskoprohr eines teleskopierbaren Diffusors verbunden ist. Nach der Aktivierung des Gassackmoduls löst sich die Abdeckplatte vom Modulgehäuse und bewegt sich bis zu einem Anschlag des Teleskoprohres, zusammen mit dem verschiebbaren Teleskoprohr auf den Insassen zu.

Aus der DE 199 04 072 A1 ist ein Gassackmodul mit einer Modulabdeckung und einem ringförmigen Gassack bekannt, der durch einen Ringspalt um die geöffnete Abdeckung herum trichterförmig in Richtung auf den Fahrzeuginsassen hin aufblasbar ist. Es ist nur eine geringfügige Bewegung der gesamten Modulabdeckung aus dem Modul heraus in Richtung des Insassen (Entfaltungsrichtung) erlaubt, wobei diese Bewegung so klein ist, daß der Insasse nicht mit der Abdeckung in Kontakt kommen kann.

Durch die Erfindung soll die Endposition der Modulabdeckung bei Entfaltung des Gassacks sicher festgelegt werden, das Öffnen und die Entfaltung des Gassacks verbessert werden und der Gassack eine definierte Endposition einnehmen.

Die Erfindung schafft ein Gassackmodul mit einem Gasgenerator, einem mit dem Gasgenerator in Strömungsverbindung stehenden Gassack, einer den Gassack überdeckenden Modulabdeckung mit einem nach dem Öffnen der Modulabdeckung separaten, mittigen Teil und einer Halteeinrichtung für den mittigen Teil, wobei die Halteeinrichtung Führungsmittel aufweist, die beim Aufblasen des Gassacks eine Verschiebung des mittigen Teils erlauben und die Verschiebung des mittigen Teils begrenzen, wobei die Halteeinrichtung eine erste Rampenfläche und der mittige Teil eine zweite Rampenfläche aufweist, und wobei die erste und zweite Rampenfläche so zusammenwirken, daß beim Aufblasen des Gassacks der mittige Teil in axialer Richtung und in radialer Richtung bezogen auf den Gasgenerator verschoben wird.

Durch das erfindungsgemäße Gassackmodul wird erreicht, daß nach dem Öffnen der Modulabdeckung nur noch das nun separate mittige Teil eine Bewegung auf den Fahrzeuginsassen hin ausführt, während die übrigen Teile der Modulabdeckung im wesentlichen ortsfest bleiben oder vom Fahrzeuginsassen wegbewegt werden. Damit wird auch für Fahrzeuginsassen, die sich in einer OOP-Situation (OOP = out of position) befinden, die Wahrscheinlichkeit von einem Teil der Modulabdeckung getroffen zu werden, noch einmal deutlich reduziert. Ist unter dem mittigen Teil und über der Halteeinrichtung ein Gassackabschnitt festgelegt, so kann der Gassackabschnitt beim Aufblasen des Gassacks den mittigen Teil der Modulabdeckung so weit verschieben, wie es die Führungsmittel erlauben. Durch die definierte Endposition der Abdeckung bzw. des mittigen Teils kann ferner die Entfaltung des Gassacks so kontrolliert werden, daß auch in einer OOP-Situation noch eine sichere Rückhaltewirkung erreichbar ist.

Beim Aufblasen des Gassacks wird der mittige Teil der Modulabdeckung in einer axialen und in einer radialen Richtung bezogen auf den Gasgenerator verschoben. Bezogen auf den Fahrzeuginsassen bedeutet dies, daß der mittige Teil der Modulabdeckung sich sowohl in Richtung auf diesen zu als auch in lateraler Richtung zu diesem bewegt, so daß es im Ergebnis zu einem seitlichen Ausweichen des mittigen Teils gegenüber dem Insassen kommt.

Gemäß einer Ausführungsform der Erfindung umfassen die Führungsmittel wenigstens ein mit dem mittigen Teil verbundenes Stiftelement.

Die Halteeinrichtung weist eine erste Rampenfläche und der mittige Teil eine zweite Rampenfläche auf, wobei die erste und die zweite Rampenfläche so zusammenwirken, daß beim Aufblasen des Gassacks der mittige Teil in axialer Richtung und in radialer Richtung bezogen auf den Gasgenerator verschoben wird. Anders gesagt bedeutet dies, daß die erste und zweite Rampenfläche als Ebenen ausgebildet sind, die aufeinander gleiten können, wodurch die Krafteinwirkung des Gassackabschnitts eine Bewegung des mittigen Teils der Modulabdeckung in bezug auf die Halteeinrichtung erzwingt, die sowohl in Richtung auf den Fahrzeuginsassen hin als auch in lateraler Richtung zu diesem verläuft. Dies ist eine besonders einfache Art, zugleich mit der Bewegung des mittigen Teils der Modulabdeckung auf den Fahrzeuginsassen zu eine seitliche Ausweichbewegung gegenüber diesem zu realisieren.

Der mittige Teil ist bevorzugt so ausgebildet, daß er ein Fahrzeugemblem trägt. In diesem Fall wird das Loslösen des Emblems von dem mittigen Teil der Abdeckung aufgrund der Bewegungsbegrenzung sicher verhindert und die Verletzungsgefahr für den Fahrzeuginsassen deutlich reduziert.

Weitere Merkmale und Vorteile der Erfindung ergeben sich aus der nachfolgenden Beschreibung und aus den nachfolgenden Zeichnungen auf die Bezug genommen wird. In den Zeichnungen zeigen:

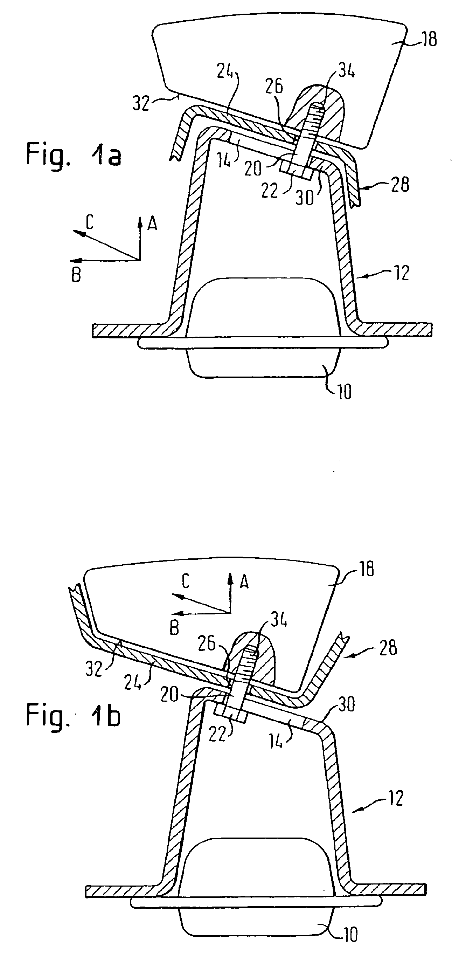

- Figuren 1a und 1b eine Ausführungsform des erfindungsgemäßen Gassackmoduls im Bereich der Halteeinrichtung.

In den Figuren 1a und 1b ist eine Ausführungsform des erfindungsgemäßen Gassackmoduls dargestellt. Ein Gasgenerator 10 ist mit einer Halteeinrichtung 12 verbunden. Die Halteeinrichtung ist becherförmig ausgeführt, weist jedoch an dem dem Gasgenerator abgewandten Ende eine erste Rampenfläche 30 auf. In der ersten Rampenfläche 30 befindet sich eine Öffnung 14, die in dieser Ausführungsform als Langloch oder Schlitz ausgebildet ist. Ein mittiger Teil 18 der Modulabdeckung hat eine zweite Rampenfläche 32, die parallel zur ersten Rampenfläche 30 der Halteeinrichtung 12 verläuft. Am mittigen Teil 18 ist ein Stiftelement 20 fixiert, wobei die Verbindung zwischen Stiftelement und mittigem Teil über einen Gewindeabschnitt 34 erfolgt. Das Stiftelement 20 weist einen Stiftendabschnitt 22 auf. Durch das Zusammenwirken des scheibenförmigen Stiftendabschnitts 22 mit der Öffnung 14 wird erreicht, daß die erste Rampenfläche 30 und die zweite Rampenfläche 32 immer einen konstanten Abstand voneinander haben. Dieser ist so bemessen, daß ein zwischen erster Rampenfläche 30 und zweiter Rampenfläche 32 liegender Gassackabschnitt 24 sowohl gut am mittigen Teil 18 der Modulabdeckung als auch an der ersten Rampenfläche anliegt. Der Gassackabschnitt 24 hat eine Gassacköffnung 26, durch die das Stiftelement 20 hindurchtritt, wodurch der Gassack 28 gegenüber dem mittigen Teil 18 der Modulabdeckung in lateraler Richtung fixiert wird.

Figur 1a zeigt den Ausgangszustand bei nicht aktiviertem Gassack 28, Figur 1b den Endzustand bei aufgeblasenem Gassack mit auf den Fahrzeuginsassen zu in Richtung A und seitlich in Richtung B verschobenem mittigen Teil 18 der Modulabdeckung.

Wird der Gasgenerator gezündet, so wird der zuerst gefaltete Gassack 28 aufgeblasen und übt auf den mittigen Teil 18, der sich beim Öffnen der Modulabdeckung von den übrigen Teilen der Modulabdeckung getrennt hat, eine solche Kraft aus, daß sich der mittige Teil 18 parallel zu den Rampenflächen 30, 32 in Pfeilrichtung C bewegt. Die als Langloch oder Schlitz ausgebildete Öffnung 14, das Stiftelement 20 und der Stiftendabschnitt 22 wirken dabei als Führungsmittel, die die Bewegung des mittigen Teils der Modulabdeckung steuern. Die Bewegung des mittigen Teils 18 wird durch den Anschlag des Stiftelements 20 an einem Längsende der Öffnung 14 begrenzt. Aus der Sicht des Fahrzeuginsassen bewegt sich der mittige Teil 18 in einer ersten Bewegungskomponente sowohl in Richtung A frontal auf diesen zu als auch in einer zweiten Bewegungskomponente in Richtung B seitlich von diesem weg.

## Patentansprüche

1. Gassackmodul mit einem Gasgenerator (10), einem mit dem Gasgenerator in Strömungsverbindung stehenden Gassack (28), einer den Gassack überdeckenden Modulabdeckung mit einem nach dem Öffnen der Modulabdeckung separaten, mittigen Teil (18) und einer Halteeinrichtung (12) für den mittigen Teil, wobei die Halteeinrichtung Führungsmittel (14,20,22) aufweist, die beim Aufblasen des Gassacks (28) eine Verschiebung des mittigen Teils (18) erlauben und die Verschiebung des mittigen Teils (18) begrenzen, **dadurch gekennzeichnet, daß** die Halteeinrichtung (12) eine erste Rampenfläche (30) und der mittige Teil (18) eine zweite Rampenfläche (32) aufweist, wobei erste und zweite Rampenfläche so zusammenwirken, daß beim Aufblasen des Gassacks (28) der mittige Teil (18) in axialer Richtung (A) und in radialer Richtung (B) bezogen auf den Gasgenerator (10) verschoben wird.

2. Gassackmodul nach Anspruch 1, **dadurch gekennzeichnet, daß** unter dem mittigem Teil (18) und über der Halteeinrichtung (12) ein Gassackabschnitt (24) festgelegt ist.

3. Gassackmodul nach einem der vorhergehenden Ansprüche, **dadurch gekennzeichnet, daß** die Führungsmittel wenigstens ein mit dem mittigen Teil (18) verbundenes Stiftelement (20) aufweisen.

4. Gassackmodul nach einem der vorhergehenden Ansprüche, **dadurch gekennzeichnet, daß** der mittige Teil (18) ein Emblem aufweist.

## Claims

1. A gas bag module comprising a gas generator (10), a gas bag (28) in fluid communication with the gas generator, a module covering which covers the gas bag and has a central part (18) that is separate after opening of the module covering, and a holding device (12) for the central part, the holding device having guide means (14, 20, 22) which during inflation of the gas bag (28) permit a displacement of the central part (18) and limit the displacement of the central part (18), **characterized in that** the holding device (12) has a first slope surface (30) and the central part (18) has a second slope surface (32), the first and second slope surfaces cooperating with each other such that during inflation of the gas bag (28) the central part (18) is displaced in the axial direction (A) and in the radial direction (B) in relation to the gas generator (10).

2. The gas bag module according to Claim 1, **characterized in that** a gas bag section (24) is secured under the central part (18) and above the holding device (12).

3. The gas bag module according to any of the preceding claims, **characterized in that** the guide means have at least one pin element (20) connected with the central part (18).

4. The gas bag module according to any of the preceding claims, **characterized in that** the central part (18) includes an emblem.

## Revendications

1. Module de coussin à gaz, comportant un générateur de gaz (10), un coussin à gaz (28) en liaison d'écoulement avec le générateur de gaz, un couvercle de module recouvrant le coussin à gaz avec une partie médiane (18), qui se sépare après l'ouverture du couvercle de module, et avec un système de retenue (12) pour la partie médiane, le système de retenue présentant des moyens de guidage (14, 20, 22) qui, lors du gonflage du coussin à gaz (28), permettent un déplacement de la partie médiane (18) et limitent le déplacement de la partie médiane (18), **caractérisé en ce que** le système de retenue (12) présente une première surface en forme de rampe (30) et la partie médiane (18) présente une deuxième surface en forme de rampe (32), les première et deuxième surfaces en forme de rampe coopérant l'une avec l'autre de telle sorte que lors du gonflage du coussin à gaz (28), la partie médiane (18) est déplacée en direction axiale (A) et en direction radiale (B) par rapport au générateur de gaz.

2. Module de coussin à gaz selon la revendication 1, **caractérisé en ce qu'**un tronçon de coussin à gaz (24) est immobilisé au-dessous de la partie médiane (18) et au-dessus du dispositif de retenue (12).

3. Module de coussin à gaz selon l'une des revendications précédentes, **caractérisé en ce que** les moyens de guidage présentent au moins un élément en forme de goupille (20) relié à la partie médiane (18).

4. Module de coussin à gaz selon l'une des revendications précédentes, **caractérisé en ce que** la partie médiane (18) présente un emblème.
